# EUROPEAN PATENT APPLICATION

(11) **EP 4 756 989 A1**
(43) Date of publication of application: **10.06.2026**
(21) Application number: 25845152.5
(22) Date of filing: 25.06.2025
(51) Int. Cl.: H01M 10/48, H01M 50/211

(54) **POUCH-TYPE BATTERY CELL TRAY HAVING TEMPERATURE SENSING FUNCTION**

(30) Priority: 22.07.2024 KR 20240096173
(71) Applicant: LG Energy Solution, Ltd., Seoul 07335 (KR)
(72) Inventor: YOON, Tae Keon, Daejeon 34122 (KR)
(74) Representative: Goddar, Heinz J.
(86) International application number: PCT/KR2025/008924
(87) International publication number: WO 2026/023888

(57) **Abstract**

Disclosed is a pouch-shaped battery cell tray having a temperature sensing function, the pouch-shaped battery cell tray including an outer frame forming a first space portion configured to receive a plurality of pouch-shaped battery cells, the outer frame being configured such that an upper surface and a part of a side surface thereof are open, a seating unit disposed in the first space portion, the seating unit being configured to allow the plurality of pouch-shaped battery cells to be vertically received therein such that a second space portion is formed between the plurality of pouch-shaped battery cells, and a temperature sensor unit disposed at a side surface of the outer frame, the temperature sensor unit being configured to measure the temperatures of the plurality of pouch-shaped battery cells received in the first space portion.

## Description

### [Technical Field]

This application claims the benefit of priority to Korean Patent Application No. 2024-0096173 filed on July 22, 2024, the disclosure of which is incorporated herein by reference in its entirety.

The present invention relates to a pouch-shaped battery cell tray having a temperature sensing function, and more particularly to a pouch-shaped battery cell tray having a temperature sensing function capable of measuring the temperature of each pouch-shaped battery cell received in the tray.

### [Background Art]

With technological development of mobile devices and an increase in demand therefor, secondary batteries, which are capable of being charged and discharged, have been used as an energy source for various mobile devices. Secondary batteries have also attracted attention as an energy source for electric vehicles and hybrid electric vehicles presented as alternatives to existing gasoline and diesel vehicles, which use fossil fuels.

Depending on the shape of a battery case, secondary batteries are categorized into a cylindrical battery having an electrode assembly mounted in a cylindrical metal can, a prismatic battery having an electrode assembly mounted in a prismatic metal can, and a pouch-shaped battery having an electrode assembly mounted in a pouch-shaped case made of an aluminum laminate sheet.

A typical pouch-shaped battery cell manufacturing process includes a process of inserting an electrode assembly into a receiving space of a cell case made of a laminate sheet, a process of injecting an electrolyte solution into the cell case, a process of sealing the cell case, and an activation process.

The activation process includes an aging process, wherein the aging process refers to a process of leaving charged batteries for a specific period (typically about 7 to 10 days) under specific temperature and charge/discharge conditions, measuring the voltages of the batteries, and sorting batteries below a specific value as defective products.

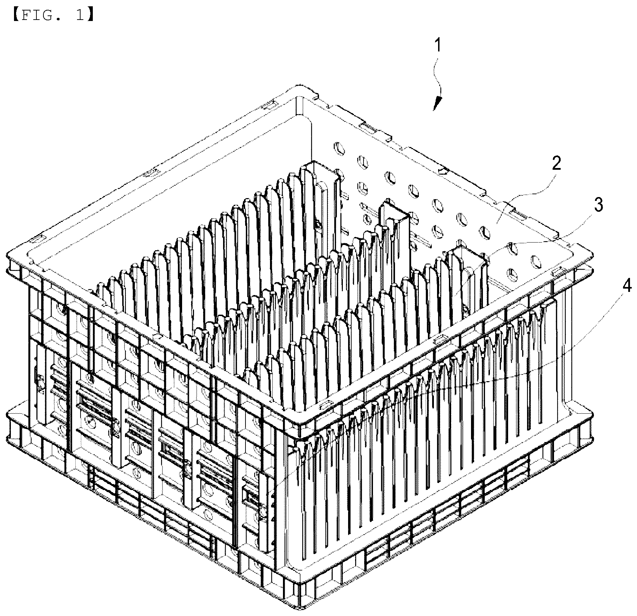

FIG. 1 is a perspective view showing a conventional battery cell tray. The aging process is performed in the state in which battery cells are received in the battery cell tray 1. Of course, the battery cell tray 1 is also used to store or transport the battery cells.

The battery cell tray 1 may include a tray body 2, which is a body in which the battery cells are received, a fixing body 3 provided in the tray body 1 such that the battery cells are inserted into and fixed to the fixing body, and a fastening means 4 configured to separably fix the fixing body 3 to the tray body 1.

However, the battery cell tray 1 has only the function of simply receiving and fixing the battery cells, and therefore it is impossible to determine whether each battery cell is defective, such as whether a defect, such as short circuit, has occurred in a specific battery cell during the aging process or during transport or storage of the battery cells.

### (Prior Art Document)

(Patent Document 1) Korean Patent Application Publication No. 10-2019-0008698

### [Disclosure]

### [Technical Problem]

The present invention has been made in view of the above problems, and it is an object of the present invention to provide a pouch-shaped battery cell tray having a temperature sensing function capable of continuously measuring the temperatures of all battery cells received in the tray in real time.

### [Technical Solution]

As a technical means for achieving the above object, a pouch-shaped battery cell tray having a temperature sensing function according to an embodiment of the present invention includes an outer frame (100) forming a first space portion (S1) configured to receive a plurality of pouch-shaped battery cells (10), the outer frame being configured such that an upper surface and a part of a side surface thereof are open, a seating unit (200) disposed in the first space portion (S1), the seating unit being configured to allow the plurality of pouch-shaped battery cells (10) to be vertically received therein such that a second space portion (S2) is formed between the plurality of pouch-shaped battery cells (10), and a temperature sensor unit (300) disposed at a side surface of the outer frame (100), the temperature sensor unit being configured to measure the temperatures of the plurality of pouch-shaped battery cells (10) received in the first space portion (S1).

Also, in the pouch-shaped battery cell tray having the temperature sensing function according to the embodiment of the present invention, the outer frame (100) may include a base member (110) on which the seating unit (200) is disposed, a pair of first side members (120) having side openings (121) configured to expose electrode leads (12) of the pouch-shaped battery cells (10), and a pair of second side members (130) provided on both sides of the pair of first side members (120).

Also, in the pouch-shaped battery cell tray having the temperature sensing function according to the embodiment of the present invention, the temperature sensor unit (300) may include a moving unit (310) provided at the first side member (120), the moving unit being movable toward the pouch-shaped battery cells (10), a guide member (320) extending inwardly from the moving unit (310) toward the pouch-shaped battery cells (10), and a plurality of temperature sensors (330) attached to one surface or the other surface of the guide member (320), the plurality of temperature sensors being configured to measure the temperatures of the pouch-shaped battery cells (10).

Also, in the pouch-shaped battery cell tray having the temperature sensing function according to the embodiment of the present invention, the moving unit (310) may include a support member (311) provided at the first side member (120) or the second side member (130), a first moving member (312) inserted into and connected to the support member (311) so as to be movable relative to the support member (311) in a forward-rearward direction, and a second moving member (313) provided at an outer surface of the first moving member (312).

Also, in the pouch-shaped battery cell tray having the temperature sensing function according to the embodiment of the present invention, the plurality of temperature sensors (330) may be inserted into the second space portion (S2) by forward movement of the first moving member (312).

Also, in the pouch-shaped battery cell tray having the temperature sensing function according to the embodiment of the present invention, the second moving member (313) may be movable relative to the first moving member (312) in a leftward-rightward direction.

Also, in the pouch-shaped battery cell tray having the temperature sensing function according to the embodiment of the present invention, the guide member (320) may be disposed at the second moving member (313).

Also, in the pouch-shaped battery cell tray having the temperature sensing function according to the embodiment of the present invention, each of the plurality of temperature sensors (330) may be a contact type temperature sensor configured to measure the temperature of the pouch-shaped battery cell (10) in contact with one surface of the pouch-shaped battery cell.

Also, in the pouch-shaped battery cell tray having the temperature sensing function according to the embodiment of the present invention, the moving unit (310) may include a support member (311) provided at the first side member (120) or the second side member (130) and a first moving member (312) inserted into and connected to the support member (311) so as to be movable relative to the support member (311) in the forward-rearward direction, the guide member (320) may be disposed at the first moving member (312), and each of the plurality of temperature sensors (330) may be a non-contact type temperature sensor configured to measure the temperature of the pouch-shaped battery cell (10) without contact with one surface of the pouch-shaped battery cell.

Also, in the pouch-shaped battery cell tray having the temperature sensing function according to the embodiment of the present invention, the temperature sensors (330) may be attached respectively to one surface and the other surface of the guide member (320) so as to measure the temperatures of a pair of pouch-shaped battery cells (10) located adjacent to each other.

Also, in the pouch-shaped battery cell tray having the temperature sensing function according to the embodiment of the present invention, the seating unit (200) may include a horizontal member (210) seated on the base member (110) and a plurality of vertical members (220) located perpendicularly to the horizontal member (210), the plurality of vertical members being disposed spaced apart from each other by a certain distance so as to form a third space portion (S3) in which the pouch-shaped battery cells (10) are received in a vertical state.

Also, in the pouch-shaped battery cell tray having the temperature sensing function according to the embodiment of the present invention, the temperature sensor unit (300) may be provided in a pair so as to be located on each of the pair of first side members (120).

### [Advantageous Effects]

As is apparent from the above description, a pouch-shaped battery cell tray having a temperature sensing function according to the present invention is configured such that a temperature sensor unit is provided at an outer frame, whereby it is possible to measure the temperatures of all pouch-shaped battery cells received in the tray, which contributes to accurate sorting of defective battery cells.

### [Description of Drawings]

FIG. 1 is a perspective view showing a conventional battery cell tray.
FIG. 2 is a perspective view illustrating a pouch-shaped battery cell.
FIG. 3 is a conceptual view of the pouch-shaped battery cell tray having a temperature sensing function according to the present invention.
FIG. 4 is a sectional view taken along line I-I of FIG. 3, showing a pouch-shaped battery cell seated in a seating unit of the battery cell tray.
FIG. 5 is a sectional view taken along line II-II of FIG. 3, illustrating a temperature sensor unit of a battery cell tray according to a first embodiment of the present invention.
FIG. 6 is a view showing that the temperature sensor unit of the pouch-shaped battery cell tray having a temperature sensing function according to the first embodiment of the present invention approaches a pouch-shaped battery cell.
FIG. 7 is a view showing that the temperature sensor unit of the pouch-shaped battery cell tray having the temperature sensing function according to the first embodiment of the present invention comes into tight contact with the pouch-shaped battery cell.
FIG. 8 is a sectional view taken along line II-II of FIG. 3, illustrating a temperature sensor unit of a battery cell tray according to a second embodiment of the present invention.
FIG. 9 is a view showing that the temperature sensor unit of the pouch-shaped battery cell tray having a temperature sensing function according to the second embodiment of the present invention approaches a pouch-shaped battery cell.
FIG. 10 is a sectional view taken along line II-II of FIG. 3, illustrating a temperature sensor unit of a battery cell tray according to a third embodiment of the present invention.
FIG. 11 is a view showing that the temperature sensor unit of the pouch-shaped battery cell tray having a temperature sensing function according to the third embodiment of the present invention approaches a pouch-shaped battery cell.

### [Best Mode]

Now, preferred embodiments of the present invention will be described in detail with reference to the accompanying drawings such that the preferred embodiments of the present invention may be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a predetermined element is included does not mean that other elements are excluded, but means that such elements may be further included unless mentioned otherwise.

Hereinafter, a pouch-shaped battery cell tray having a temperature sensing function according to the present invention will be described.

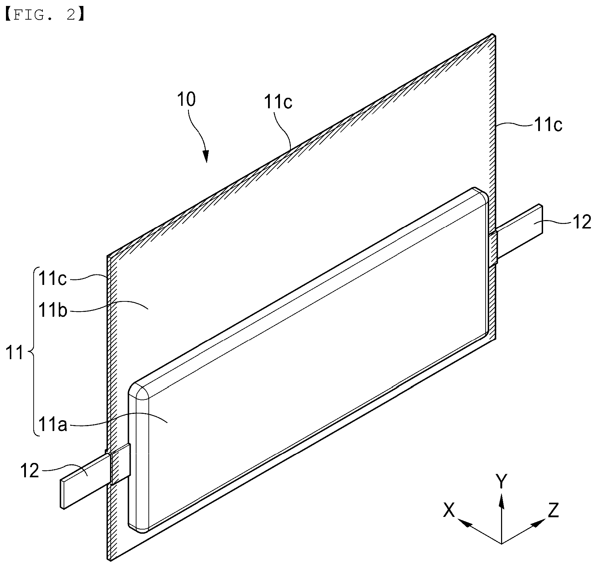

FIG. 2 is a perspective view illustrating a pouch-shaped battery cell. Referring to FIG. 2, the pouch-shaped battery cell 10 includes an electrode assembly (not shown) having a pair of electrode leads 12 located opposite each other and a cell case 11 including a first pocket portion 11a configured to receive the electrode assembly, a second pocket portion 11b configured to collect gas, and a sealed portion 11c provided at the edges of the first pocket portion 11a and the second pocket portion 11b.

Here, the electrode assembly may be a jelly-roll type electrode assembly, which is configured to have a structure in which a long sheet type negative electrode and a long sheet type positive electrode are wound in the state in which a separator is interposed therebetween, a stacked type electrode assembly including unit cells, each of which is configured to have a structure in which a rectangular positive electrode and a rectangular negative electrode are stacked in the state in which a separator is interposed therebetween, a stacked and folded type electrode assembly, which is configured to have a structure in which unit cells are wound using a long separation film, or a laminated and stacked type electrode assembly, which is configured to have a structure in which unit cells are stacked in the state in which a separator is interposed therebetween and are then attached to each other; however, the present invention is not limited thereto.

Specifically, the negative electrode is manufactured by applying a slurry mixture of a negative electrode active material and a binder to a negative electrode current collector.

Here, as the negative electrode active material, for example, there may be used carbon, such as non-graphitizing carbon or graphite-based carbon; a metal composite oxide, such as LiₓFe₂O₃ (0≤x≤1), LiₓWO₂ (0≤x≤1), SnₓMe₁₋ₓMe' _{y}O_{z} (Me: Mn, Fe, Pb, Ge; Me': Al, B, P, Si, Group 1, 2, and 3 elements of the periodic table, halogen; 0<x≤1; 1≤y≤3; 1≤z≤8); lithium metal; a lithium alloy; a silicon-based alloy; a tin-based alloy; a metal oxide, such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, or Bi₂O₅; a conductive polymer, such as polyacetylene; a Li-Co-Ni-based material, or a Si-based material, such as Si, SiO, SiO₂, or a mixture thereof; however, the present invention is not limited thereto.

The positive electrode is manufactured by applying a slurry mixture of a positive electrode active material and a binder to a positive electrode current collector.

A layered compound, such as a lithium cobalt oxide (LiCoO₂) or a lithium nickel oxide (LiNiO₂), or a compound substituted with one or more transition metals; a lithium manganese oxide represented by the chemical formula Li₁₊ₓMn₂₋ₓO₄ (where x = 0 to 0.33) or a lithium manganese oxide, such as LiMnO₃, LiMn₂O₃, or LiMnO₂; a lithium copper oxide (Li₂CuO₂); a vanadium oxide, such as LiV₃O₈, V₂O₅, or Cu₂V₂O₇ ; a Ni-sited lithium nickel oxide represented by the chemical formula LiNi₁₋ₓMₓO₂ (where M = Co, Mn, Al, Cu, Fe, Mg, B, or Ga, and x = 0.01 to 0.3); a lithium manganese composite oxide represented by the chemical formula LiMn₂₋ₓMₓO₂ (where M = Co, Ni, Fe, Cr, Zn, or Ta, and x = 0.01 to 0.1) or the chemical formula Li₂Mn₃MO₈ (where M = Fe, Co, Ni, Cu, or Zn); LiMn₂O₄ in which a part of Li in the chemical formula is replaced by alkaline earth metal ions; a disulfide compound; or Fe₂(MoO₄)₃ may be used as the positive electrode active material; however, the present invention is not limited thereto.

Meanwhile, each of the negative electrode current collector and the positive electrode current collector includes a part to which the slurry mixture including the active material is applied and an uncoated portion, which is a part to which no slurry mixture is applied, wherein the uncoated portion is cut to form an electrode tab, or a separate conductive member is connected to the uncoated portion by ultrasonic welding to form an electrode tab, and electrode tabs are gathered to form a tab bundle.

Each of a pair of electrode leads 12 constituted by a positive electrode lead and a negative electrode lead is electrically connected to the tab bundle of the electrode assembly and is exposed to the outside of the cell case 11.

The first pocket portion 11a configured to receive the electrode assembly and the second pocket portion 11b configured to collect gas are formed in the cell case 11 using a laminate sheet including an outer covering layer, a metal layer, and an inner covering layer.

The inner covering layer is in direct contact with the electrode assembly, and therefore the inner covering layer must exhibit high insulation properties and high electrolytic resistance. In addition, the inner covering layer must exhibit high sealability in order to hermetically isolate the battery case from the outside, i.e., a thermally-bonded sealed portion between inner layers must exhibit excellent thermal bonding strength.

The inner covering layer may be made of a material selected from among a polyolefin-based resin, such as polypropylene, polyethylene, polyethylene acrylic acid, or polybutylene, a polyurethane resin, and a polyimide resin, which exhibit excellent chemical resistance and high sealability; however, the present invention is not limited thereto, and polypropylene, which exhibits excellent mechanical properties, such as tensile strength, rigidity, surface hardness, and impact resistance, and excellent chemical resistance, is the most preferably used.

The metal layer, which abuts the inner covering layer, corresponds to a barrier layer configured to prevent moisture or various gases from permeating into the battery from the outside. An aluminum thin film, which is lightweight and easily shapeable, may be used as a preferred material for the metal layer.

The outer covering layer is provided at the other surface of the metal layer, and the outer covering layer may be made of a heat-resistant polymer that exhibits excellent tensile strength, resistance to moisture permeation, and resistance to air transmission such that the outer covering layer exhibits high heat resistance and chemical resistance while protecting the electrode assembly. As an example, the outer covering layer may be made of nylon or polyethylene terephthalate; however, the present invention is not limited thereto.

In the present invention, the overall length direction of the pouch-shaped battery cell 10 means a z-axis direction (2 o'clock to 8 o'clock direction), and the overall width direction means a y-axis direction (12 o'clock to 6 o'clock direction), based on FIG. 2.

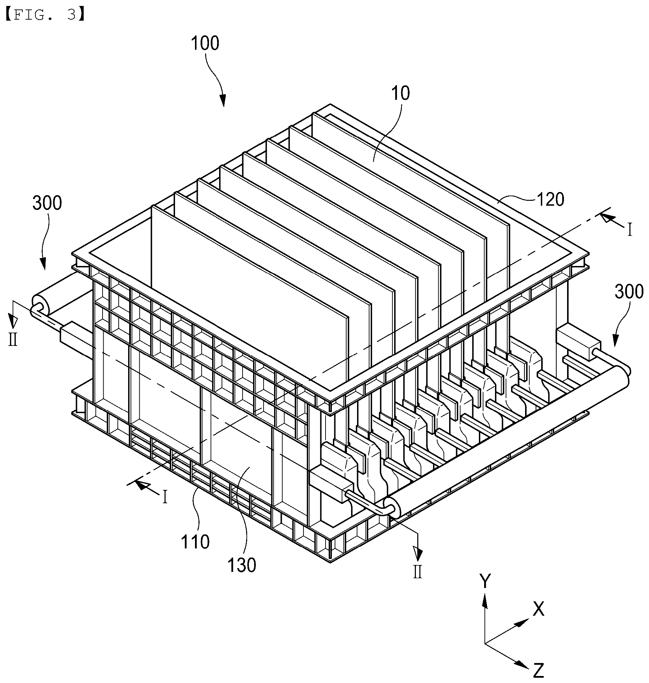

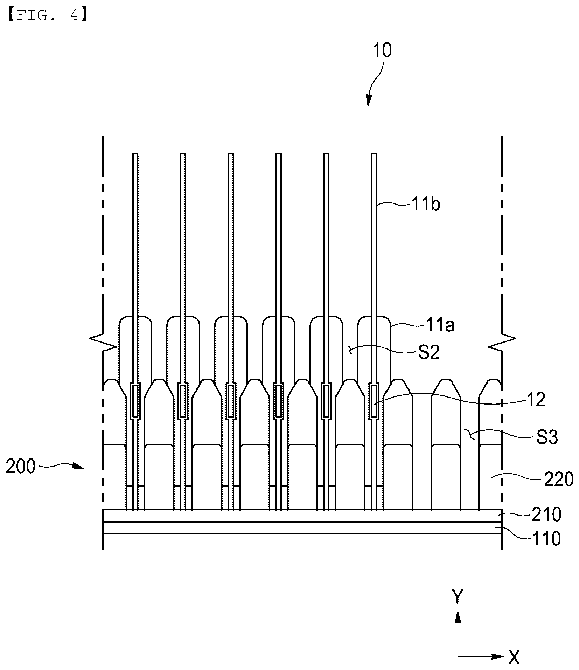

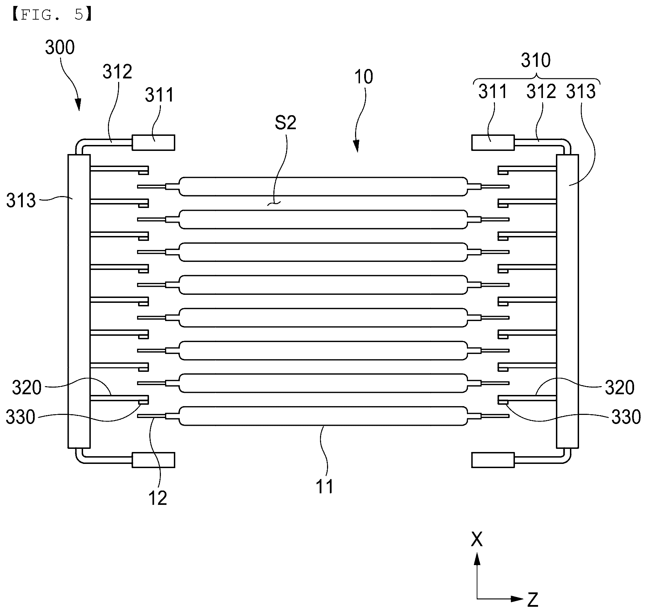

FIG. 3 is a conceptual view of the pouch-shaped battery cell tray having a temperature sensing function according to the present invention, FIG. 4 is a sectional view taken along line I-I of FIG. 3, showing a pouch-shaped battery cell seated in a seating unit of the battery cell tray, and FIG. 5 is a sectional view taken along line II-II of FIG. 3, illustrating a temperature sensor unit of a battery cell tray according to a first embodiment of the present invention.

Referring to FIGs. 2 to 5, the pouch-shaped battery cell tray having a temperature sensing function according to the first embodiment of the present invention includes an outer frame 100, a seating unit 200, and a temperature sensor unit 300.

First, the outer frame 100 may form a first space portion S1 configured to receive a plurality of pouch-shaped battery cells 10 configured as described above, and may be configured such that an upper surface and a part of a side surface thereof are open.

The outer frame 100 may include a base member 110, a pair of first side members 120, and a pair of second side members 130, and may be configured to have an open top.

Specifically, the base member 110, which is a place where the seating unit 200 is located, may be formed in the shape of an approximately flat plate.

The first side members 120 may be provided with side openings 121 through which the electrode leads 12 of the pouch-shaped battery cells 10 received in the first space portion S1 are exposed to the outside. In this case, the first side members 120 may be configured as frame members having the side openings 121 formed therein.

In addition, the second side members 130 may be provided on both sides of the pair of first side members 120 and may be disposed perpendicularly to the pair of first side members 120 while being connected thereto.

The seating unit 200 is disposed in the first space portion S1 formed by the outer frame 100, and includes a horizontal member 210 and a plurality of vertical members 220.

The horizontal member 210 may be seated on the base member 110 in a horizontal direction (3 o'clock to 9 o'clock direction in FIG. 4), may be formed in an approximately flat plate shape to support lower ends of the pouch-shaped battery cells 10, and may be made of an insulating material. Here, the lower end of each of the pouch-shaped battery cells 10 refers to a part (6 o'clock direction in FIG. 2) of the first pocket portion 11a of the pouch-shaped battery cell 10 that is disposed vertically.

As an example, the insulating material may include at least one of polyethylene, polyethylene terephthalate, polypropylene, polystyrene, and polyvinyl chloride; however, the present invention is not limited thereto as long as the insulating material can maintain insulating properties while supporting the received pouch-shaped battery cells 10.

The plurality of vertical members 220 may be located perpendicularly to the horizontal member 210, and may be disposed spaced apart from each other by a certain distance so as to form a third space portion S3 in which the pouch-shaped battery cells 10 are received in a vertical state. The third space portion S3 is a space formed as the result of the plurality of vertical members 220 being spaced apart from each other to allow the pouch-shaped battery cells 10 to be received therein.

Each of the vertical members 220 may be configured to have a height lower than height in the overall width direction (6 o'clock to 12 o'clock direction in FIG. 4) of the first pocket portion 11a of each of the pouch-shaped battery cells 10 received in the third space portion S3. In addition, although not shown in the figures, each of the vertical members 220 may be provided with an extension portion (not shown) configured to support the first pocket portion 11a in order to prevent the pouch-shaped battery cell 10 from escaping from the third space portion S3. The extension portion may extend vertically from each of both ends of the vertical member 220.

Meanwhile, when the plurality of pouch-shaped battery cells 10 is received in the third space portion S3, second space portions S2 formed so as to be spaced apart from each other are provided between the respective battery cells 10.

The outer frame 100 and the seating unit 200 may be implemented in various forms obvious to those skilled in the art, and therefore a more detailed description thereof will be omitted.

The temperature sensor unit 300 may be disposed at the side surface of the outer frame 100, and may be configured to measure the temperatures of the plurality of pouch-shaped battery cells 10 received in the first space portion S1. The side surface of the outer frame 100 at which the temperature sensor unit 300 is disposed may be the first side member 120 or the second side member 130 having the side opening 121 formed therein. Hereinafter, the case in which the temperature sensor unit 300 is disposed at the first side member 120 will be described.

The temperature sensor unit 300 may include a moving unit 310, a guide member 320, and a plurality of temperature sensors 330.

More specifically, the moving unit 310 may be provided at the first side member 120, and may be movable toward the pouch-shaped battery cell 10. The moving part 310 includes a support member 311, a first moving member 312, and a second moving member 313.

First, the support member 311 may be provided at the first side member 120. For example, the support member 311 may extend outward from a vertical frame of the first side member 120. In addition, as another example, the support member 311 may be embedded in the vertical frame of the first side member 120.

The support member 311 may be configured to allow the first moving member 312 to be connected to the first side member 120 therethrough, and an insertion hole (not shown) for connection to the first moving member 312 may be formed in the support member 311.

The first moving member 312 may be inserted into and connected to the support member 311 so as to be movable relative to the support member 311 in a forward-rearward direction (3 o'clock to 9 o'clock direction in FIG. 5). For example, the first moving member 312 may be inserted into the insertion hole formed in the support member 311 so as to be movable in the forward-rearward direction.

In this case, it is desirable for the first moving member 312 to be moved relative to the support member 311 in the forward-rearward direction and not to come into contact with the electrode lead 12 of the pouch-shaped battery cell 10 during forward movement.

In addition, the second moving member 313 may be provided at an outer surface of the first moving member 312, and may be moved relative to the first moving member 312 in a leftward-rightward direction (12 o'clock to 6 o'clock direction in FIG. 5).

For example, the second moving member 313 may be configured in a form that wraps around the outer surface of the first moving member 312. In addition, as another example, the second moving member 313 may be coupled to a side surface of the first moving member 312 facing the side opening 121 so as to be slidable in the leftward-rightward direction. However, the configuration of the second moving member 313 is not limited thereto, and the second moving member may be coupled to (disposed at) the first moving member 312 in various forms in which the second moving member is movable relative to the first moving member 312 in the leftward-rightward direction.

The guide member 320 may extend inwardly from the moving member 310 toward the pouch-shaped battery cell 10. More specifically, the guide member 320 may be disposed at the second moving member 313, and may extend inwardly toward the pouch-shaped battery cell 10.

In this case, it is desirable for the guide member 320 to be provided in plural so as to correspond to the number of the second space portions S2 into which the pouch-shaped battery cells 10 are inserted and for the plurality of guide members to be spaced apart from each other by a certain distance such that interference between the guide members and the pouch-shaped battery cells can be prevented during insertion of the pouch-shaped battery cells 10 or insertion of the guide members 320.

For example, the guide members 320 may be moved toward the pouch-shaped battery cells 10 by forward movement of the first moving member 312, but may be spaced apart from each other by a certain distance such that the guide members can be inserted into the second space portion S2 without interference with the pouch-shaped battery cells. That is, the guide members 320 may be disposed so as to have intervals corresponding to the intervals of the pouch-shaped battery cells 10.

In addition, the guide member 320 may be disposed at the second moving member 313, may be moved together with the second moving member 313 during the leftward-rightward movement of the second moving member, and may come into contact with the pouch-shaped battery cell 10.

The plurality of temperature sensors 330 may be attached to one surface or the other surface of the guide member 320 to measure the temperatures of the pouch-shaped battery cells 10. In this case, each of the plurality of temperature sensors 330 may be a contact type temperature sensor configured to measure the temperature of the pouch-shaped battery cell 10 in contact with one surface of the pouch-shaped battery cell.

The temperature sensor unit 300 may be provided at only one of the pair of first side members 120 of the outer frame 100. However, it is obvious that the temperature sensor unit may be provided in a pair so as to be provided at each of the pair of first side members 120.

In this case, the pair of temperature sensor units 300 may be configured to measure the temperature of the same surface of the pouch-shaped battery cell 10. However, the present invention is not limited to thereto, and the pair of temperature sensor units 300 may be configured to measure the temperatures of different surfaces of the pouch-shaped battery cell 10.

In addition, the pair of temperature sensor units 300 may be configured to measure the temperatures near the positive electrode and the negative electrode of the pouch-shaped battery cell 10.

In addition, the temperature sensor 330 may provide the measured temperature information of the pouch-shaped battery cell 10 to a controller (not shown). For example, the temperature information of the pouch-shaped battery cell 10 measured by the temperature sensor 330 may be transmitted to the controller via wired or wireless connection. The controller may transmit the temperature information of each of the plurality of pouch-shaped battery cells 10 in real time based on the received temperature information, may determine whether the pouch-shaped battery cell 10 is defective utilizing a deep learning function, and may transmit a defect signal to the operator.

For example, if the temperature of one of the pouch-shaped battery cells 10 in the received temperature information is different from the temperatures of the other pouch-shaped battery cells 10 or is different from a pre-learned temperature, the controller may determine that the low-temperature pouch-shaped battery cell to be defective, and may display a defect signal on an equipment monitor (e.g., a display unit) or transmit the defect signal to the operator's terminal (e.g., a mobile phone) .

The controller performs overall control such that the functions of components are normally performed. The controller may be implemented in the form of hardware, may be implemented in the form of software, or may be in the form of a combination of hardware and software. The controller may be implemented in the form of a computing device (an arithmetic device) such as a microprocessor, but is not limited thereto, and may be implemented in any of various forms that are obvious to those skilled in the art.

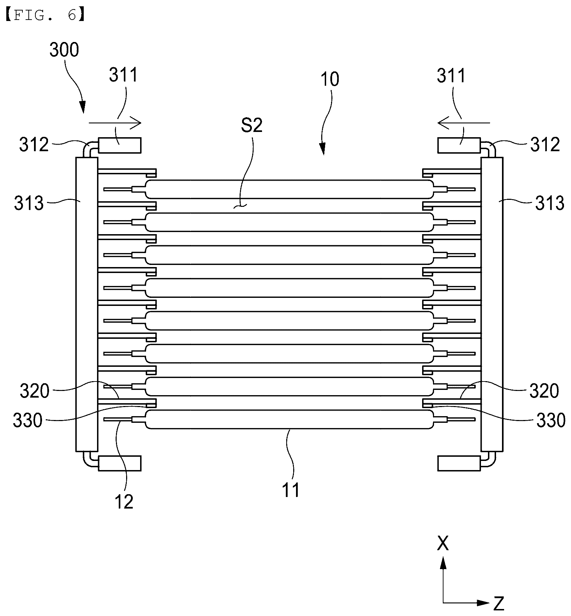

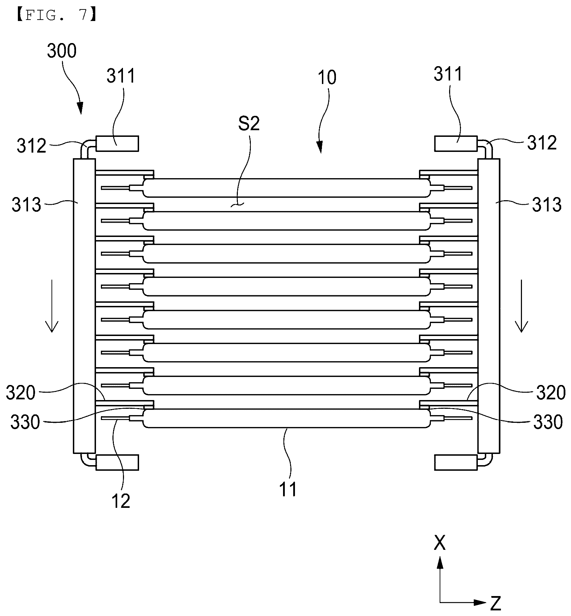

FIG. 6 is a view showing that the temperature sensor unit of the pouch-shaped battery cell tray having the temperature sensing function according to the first embodiment of the present invention approaches a pouch-shaped battery cell, and FIG. 7 is a view showing that the temperature sensor unit of the pouch-shaped battery cell tray having the temperature sensing function according to the first embodiment of the present invention comes into tight contact with the pouch-shaped battery cell.

For example, each of the plurality of temperature sensors 330 may be attached to the other surface (6 o'clock direction in FIG. 6) of a corresponding one of the plurality of guide members 320, may be moved forward toward a corresponding one of the pouch-shaped battery cells 10 (9 o'clock or 3 o'clock direction in FIG. 6) by the first moving member 312, and may be moved in the other direction (6 o'clock direction in FIG. 7) by the second moving member 313. Thus, each of the plurality of temperature sensors 330 may come into contact with one surface (12 o'clock direction in FIG. 7) of a corresponding one of the pouch-shaped battery cells 10 to measure the temperature of the pouch-shaped battery cell 10.

In addition, as another example, each of the plurality of temperature sensors 330 may be attached to one surface (12 o'clock direction in FIG. 6) of a corresponding one of the plurality of guide members 320, may be moved forward toward a corresponding one of the pouch-shaped battery cells 10 by the first moving member 312, and may be moved in one direction by the second moving member 313. Thus, each of the plurality of temperature sensors may come into contact with the other surface (6 o'clock direction in FIG. 7) of a corresponding one of the pouch-shaped battery cells 10 to measure the temperature of the pouch-shaped battery cell 10.

At this time, it is desirable for the plurality of temperature sensors 330 to be inserted into the second space portion S2 together with the guide member 320 during the forward movement of the first moving member 312 toward the pouch-shaped battery cells 10.

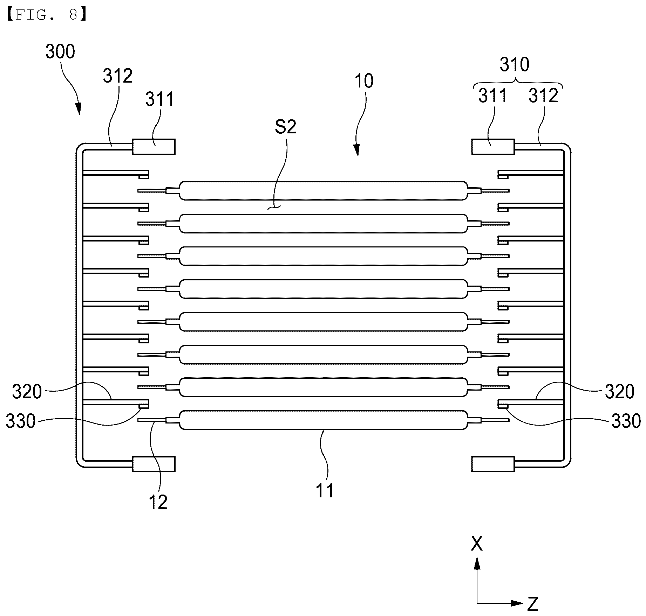

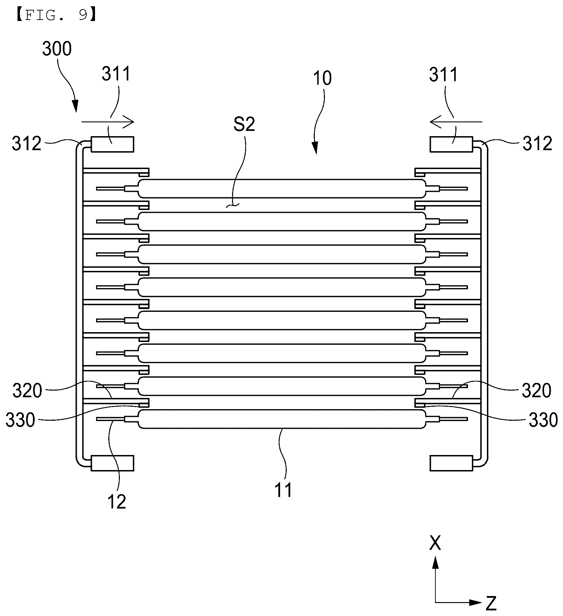

FIG. 8 is a sectional view taken along line II-II of FIG. 3, illustrating a temperature sensor unit of a battery cell tray according to a second embodiment of the present invention, and FIG. 9 is a view showing that the temperature sensor unit of the pouch-shaped battery cell tray having a temperature sensing function according to the second embodiment of the present invention approaches a pouch-shaped battery cell.

The pouch-shaped battery cell tray having the temperature sensing function according to the second embodiment of the present invention includes an outer tray 100, a seating unit 200, and a temperature sensor unit 300, in the same manner as in the first embodiment.

However, in the second embodiment, a moving unit 310 of the temperature sensor unit 300 may not include a second moving member 313, unlike the first embodiment.

In this case, a guide member 320 may be disposed at a first moving member 312 and may approach a pouch-shaped battery cell 10 only through forward movement without leftward-rightward movement, and each of a plurality of temperature sensors 330 may be constituted by as a non-contact type temperature sensor configured to measure the temperature of the pouch-shaped battery cell 10 without contact with one surface thereof.

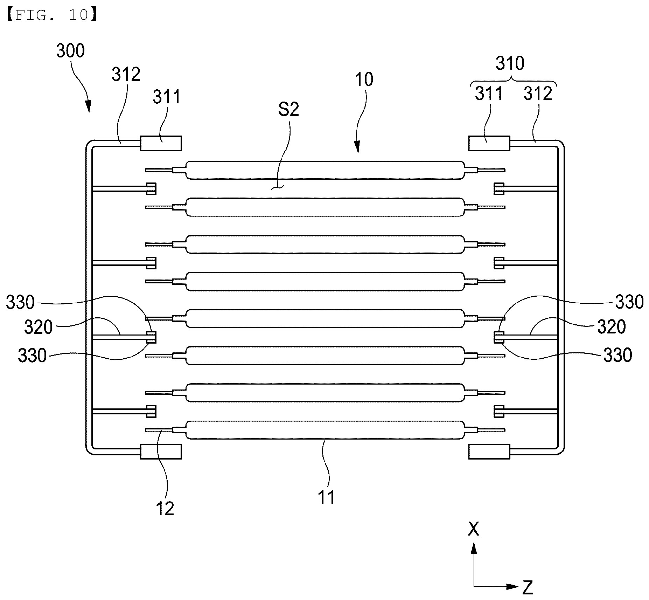

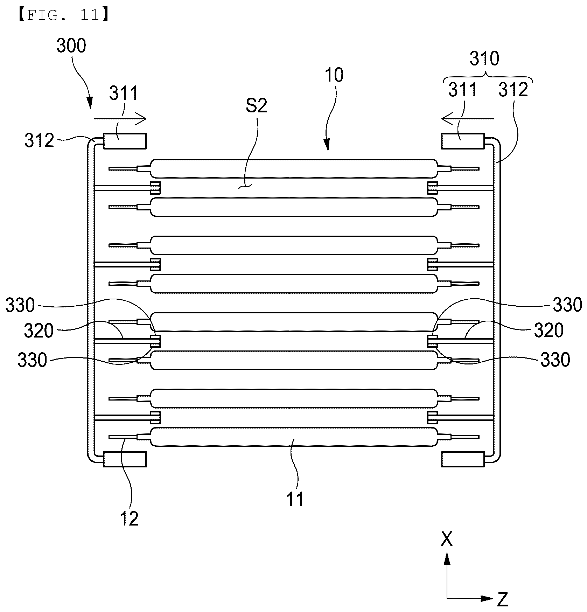

FIG. 10 is a sectional view taken along line II-II of FIG. 3, illustrating a temperature sensor unit of a battery cell tray according to a third embodiment of the present invention, and FIG. 11 is a view showing that the temperature sensor unit of the pouch-shaped battery cell tray having a temperature sensing function according to the third embodiment of the present invention approaches a pouch-shaped battery cell.

The pouch-shaped battery cell tray having the temperature sensing function according to the third embodiment of the present invention includes an outer tray 100, a seating unit 200, and a temperature sensor unit 300, in the same manner as in the first embodiment and the second embodiment.

However, in the third embodiment, temperature sensors 330 configured to measure the temperatures of a pair of pouch-shaped battery cells 10 located adjacent to each other may be attached to one surface and the other surface of a guide member 320, respectively.

Accordingly, the guide member 320 may not be provided in the same number as the pouch-shaped battery cells 10 but may be provided in a number less than the number of third space portions S3 into which the pouch-shaped battery cells 10 are inserted.

That is, since temperature sensors 330 are attached to one surface and the other surface of a single guide member 320, respectively, and the single guide member 320 guides the temperature sensors such that the temperature sensors can measure the temperatures of a pair of pouch-shaped battery cells 10, one guide member 320 may be provided per pair of pouch-shaped battery cells 10.

In other words, a plurality of guide members 320 may be disposed so as to have intervals corresponding to the distance between the pair of pouch-shaped battery cells 10.

Furthermore, in this case, each of the plurality of temperature sensors 330 may be constituted by a non-contact type temperature sensor configured to measure the temperature of the pouch-shaped battery cell 10 without contact with one surface thereof, in the same manner as in the second embodiment.

Although the specific details of the present invention have been described in detail, those skilled in the art will appreciate that the detailed description thereof discloses only preferred embodiments of the present invention and thus does not limit the scope of the present invention. Accordingly, those skilled in the art will appreciate that various changes and modifications are possible, without departing from the category and the technical idea of the present invention, and it will be obvious that such changes and modifications fall within the scope of the appended claims.

### (Description of Reference Symbols)

- 10:: Pouch-shaped battery cell
- 11:: Cell case
- 11a:: First pocket portion 11b: Second pocket portion
- 11c:: Sealed portion
- 12:: Electrode lead
- 100:: Outer frame
- 110:: Base member
- 120:: First side member 121: Side opening
- 130:: Second side member
- 200:: Seating unit
- 210:: Horizontal member 220: Vertical member
- 300:: Temperature sensor unit
- 310:: Moving unit
- 311:: Support member
- 312:: First moving member
- 313:: Second moving member
- 320:: Guide member
- 330:: Temperature sensor
- S1:: First space portion
- S2:: Second space portion
- S3:: Third space portion

## Claims

1. A pouch-shaped battery cell tray having a temperature sensing function, the pouch-shaped battery cell tray comprising:
an outer frame forming a first space portion configured to receive a plurality of pouch-shaped battery cells, the outer frame being configured such that an upper surface and a part of a side surface thereof are open;
a seating unit disposed in the first space portion, the seating unit being configured to allow the plurality of pouch-shaped battery cells to be vertically received therein such that a second space portion is formed between the plurality of pouch-shaped battery cells; and
a temperature sensor unit disposed at a side surface of the outer frame, the temperature sensor unit being configured to measure temperatures of the plurality of pouch-shaped battery cells received in the first space portion.

2. The pouch-shaped battery cell tray according to claim 1, wherein the outer frame comprises:
a base member on which the seating unit is disposed;
a pair of first side members having side openings configured to expose electrode leads of the pouch-shaped battery cells; and
a pair of second side members provided on both sides of the pair of first side members.

3. The pouch-shaped battery cell tray according to claim 2, wherein the temperature sensor unit comprises:
a moving unit provided at the first side member, the moving unit being movable toward the pouch-shaped battery cells;
a guide member extending inwardly from the moving unit toward the pouch-shaped battery cells; and
a plurality of temperature sensors attached to one surface or the other surface of the guide member, the plurality of temperature sensors being configured to measure the temperatures of the pouch-shaped battery cells.

4. The pouch-shaped battery cell tray according to claim 3, wherein the moving unit comprises:
a support member provided at the first side member or the second side member;
a first moving member inserted into and connected to the support member so as to be movable relative to the support member in a forward-rearward direction; and
a second moving member provided at an outer surface of the first moving member.

5. The pouch-shaped battery cell tray according to claim 4, wherein the plurality of temperature sensors is inserted into the second space portion by forward movement of the first moving member.

6. The pouch-shaped battery cell tray according to claim 5, wherein the second moving member is movable relative to the first moving member in a leftward-rightward direction.

7. The pouch-shaped battery cell tray according to claim 6, wherein the guide member is disposed at the second moving member.

8. The pouch-shaped battery cell tray according to claim 7, wherein each of the plurality of temperature sensors is a contact type temperature sensor configured to measure the temperature of the pouch-shaped battery cell in contact with one surface of the pouch-shaped battery cell.

9. The pouch-shaped battery cell tray according to claim 4, wherein
the moving unit comprises:
a support member provided at the first side member or the second side member; and
a first moving member inserted into and connected to the support member so as to be movable relative to the support member in the forward-rearward direction,
the guide member is disposed at the first moving member, and
each of the plurality of temperature sensors is a non-contact type temperature sensor configured to measure the temperature of the pouch-shaped battery cell without contact with one surface of the pouch-shaped battery cell.

10. The pouch-shaped battery cell tray according to claim 9, wherein the temperature sensors are attached respectively to one surface and the other surface of the guide member so as to measure the temperatures of a pair of pouch-shaped battery cells located adjacent to each other.

11. The pouch-shaped battery cell tray according to claim 3, wherein the seating unit comprises:
a horizontal member seated on the base member; and
a plurality of vertical members located perpendicularly to the horizontal member, the plurality of vertical members being disposed spaced apart from each other by a certain distance so as to form a third space portion in which the pouch-shaped battery cells are received in a vertical state.

12. The pouch-shaped battery cell tray according to claim 3, wherein the temperature sensor unit is provided in a pair so as to be located on each of the pair of first side members.
